# EUROPÄISCHE PATENTSCHRIFT

(11) **EP 2 455 741 B1**
(45) Veröffentlichungstag und Bekanntmachung des Hinweises auf die Patenterteilung: **15.10.2014**
(21) Anmeldenummer: 11008522.2
(22) Anmeldetag: 25.10.2011
(51) Int. Cl.: G01N 3/54

(54) **Verfahren und Vorrichtung zur Bestimmung der Härte eines pressgehärteten Bauteils**
Method and device for determining the hardness of a press-hardened component
Procédé et dispositif destinés à la détermination de la dureté d'un composant durci à la presse

(30) Priorität: 27.10.2010 DE 102010049802
(43) Veröffentlichungstag der Anmeldung: 23.05.2012
(73) Patentinhaber: Schuler Pressen GmbH, 73033 Göppingen (DE)
(72) Erfinder: Wischnewski, Manfred, 59425 Unna (DE)
(74) Vertreter: Lasch, Hartmut

(56) Entgegenhaltungen:
- EP-A1- 2 182 082
- DE-A1- 19 623 159
- DE-A1-102006 027 028
- DE-A1-102007 009 937

## Beschreibung

Die Erfindung betrifft ein Verfahren zur Bestimmung der Härte eines pressgehärteten Bauteils sowie eine Vorrichtung zur Durchführung des Verfahrens.

Bei der Herstellung von metallenen Formteilen ist es bekannt, eine metallene Platine in eine hydraulische Presse zwischen ein Oberwerkzeug und ein Unterwerkzeug einzulegen und dann die Werkzeuge gegeneinander zu verfahren und dabei die Platine entsprechend den Formgebungen auf den Formflächen der Werkzeuge umzuformen.

Wie aus der DE 10 2007 009 937 A1 bekannt ist, wird bei sogenannten Presshärten oder auch Formhärten die umzuformende Platine bzw. ein umzuformendes Grundteil zunächst in einem Ofen bei einer Temperatur von ca. 800°C bis 1000°C austenitisiert, wodurch sich die Gitterstruktur des Metalls auflöst. Die in diesem Zustand rotglühende Platine wird in eine Presse eingelegt, in die ein gekühltes Werkzeug eingebaut ist. Während des Schließvorgangs der Presse wird die Platine zu einem Bauteil umgeformt. Nach dem Erreichen des geschlossenen Zustandes verbleibt die Presse zunächst in ihrer Position und es beginnt die sogenannte Haltezeit, in der das Bauteil gekühlt wird, wodurch dem Bauteil innerhalb von wenigen Sekunden die Wärme entzogen wird. Nach Ende des Kühlvorganges bzw. bei Ablauf der Haltezeit wird das Bauteil, das nunmehr eine Temperatur im Bereich von 150°C bis 250°C aufweist, aus der Presse entnommen und einer weiteren Bearbeitung zugeführt. Aufgrund der relativ schnellen Abkühlung des Materials bildet sich eine martensitische Gefügestruktur im Stahl aus, die für relativ hohe Härtewerte des Bauteils sorgt.

Die Härte des umgeformten Bauteils ist wesentlich von der Abkühlgeschwindigkeit abhängig, die wiederum in hohem Maße von dem Anpressdruck des gekühlten Ober- oder Unterwerkzeugs abhängt. Bereiche des Bauteils, die bei der Umformung einem nur geringen Anpressdruck ausgesetzt sind und damit auch nur langsam abkühlen, weisen verglichen mit Bereichen, die einem hohen Anpressdruck ausgesetzt sind und schnell abkühlen, eine verringerte Härte auf. Dies kann dazu führen, dass das Bauteil nicht die gewünschten Festigkeitseigenschaften besitzt, was sich jedoch üblicherweise erst bei der späteren Verwendung des Bauteils herausstellt. Eine Prüfung der Festigkeitseigenschaften des Bauteils ist meistens mit dessen Zerstörung verbunden und somit in der Praxis nur im Ausnahmefall bei einigen wenigen Bauteilen einer Produktionsserie durchführbar.

Der Erfindung liegt die Aufgabe zugrunde, ein Verfahren zu schaffen, mit dem die Härte eines Bauteils, das mittels Presshärtens oder Formhärtens umgeformt und gekühlt ist, zuverlässig bestimmt werden kann. Darüber hinaus soll eine Vorrichtung geschaffen werden, mit der sich das Verfahren in einfacher Weise ausführen lässt.

Diese Aufgabe wird mit einem Verfahren mit den Merkmalen des Anspruchs 1 gelöst. Dabei ist vorgesehen, dass die Oberflächentemperaturen des Bauteils unmittelbar nach der Abkühlung in unterschiedlichen Oberflächenbereichen erfasst werden, dass die dabei gemessenen Temperaturdaten einer Auswertungseinrichtung zugeführt, dort in Daten bezüglich der IST-Härte des Bauteils umgerechnet und mit SOLL-Härten vergleichen werden und dass Betriebsparameter der Presse geändert werden und/oder das Bauteil ausgeschleust wird, wenn die IST-Härte des Bauteils von der SOLL-Härte um mehr als ein vorgegebener Toleranzwert abweicht.

Erfindungsgemäß wird von der Grundüberlegung ausgegangen, dass in denjenigen Bereichen, in denen eine verringerte Härte vorliegt, der Anpressdruck beim Umformen und somit die Abkühlung verringert war. Somit weisen diese Bereiche eine relativ hohe Restwärme auf und ihre Temperatur ist höher als die bei hohem Anpressdruck schnell abgekühlten Bereiche.

Wenn die Temperatur in einem Bereich des Bauteils zu gering ist, besteht die Gefahr, dass das Bauteil in diesem Bereich zu stark gehärtet wurde und damit spröde ist, d.h. eine übermäßig verringerte Elastizität besitzt.

Durch die Messung der Restwärme in Form einer Messung der Oberflächentemperaturen des Bauteils in unterschiedlichen Bereichen kann die Härte des Bauteils abschnittsweise mit relativ hoher Genauigkeit bestimmt werden. Erfindungsgemäß werden die Oberflächentemperaturen des Bauteils unmittelbar nach der Umformung und Abkühlung in einer Messvorrichtung gemessen, die der Presse nachgeschaltet ist. Der Begriff "unmittelbar" soll besagen, dass die Temperaturerfassung am Bauteil innerhalb von zumindest 60 sec. nach Öffnen der Presse erfolgt. Insbesondere ist vorgesehen, dass die Messung der Oberflächentemperaturen in einem zeitlichen Bereich von 1sec. bis 10sec. nach Einsetzen in die Messvorrichtung und insbesondere in einem zeitlichen Bereich von 5sec. bis 10sec. nach Einsetzen in die Messvorrichtung erfolgt.

Die gemessenen Oberflächentemperaturen des Bauteils werden in einer Auswerteeinrichtung, insbesondere einem Rechner in Daten bezüglich der IST-Härte des Bauteils umgerechnet und dann mit Daten bezüglich der SOLL-Härte des Bauteils verglichen, die in der Auswerteeinrichtung hinterlegt sind. Auf diese Weise lässt sich eine hohe Qualitätskontrolle jedes Bauteils im Produktionsprozess erzielen. Wenn eine errechnete IST-Härte von einer SOLL-Härte um mehr als eine maximale Differenz Δ abweicht, wird das Bauteil entweder aus dem Produktionsprozess herausgenommen, d.h. ausgeschleust oder ausgeschieden, oder zumindest einer weiteren Untersuchung seiner Beschaffenheit und insbesondere seiner Festigkeit unterzogen. Alternativ oder zusätzlich dazu können Betriebsparameter der Presse geändert werden, wenn die IST-Härte des Bauteils von der SOLL-Härte übermässig abweicht. Dabei kann vorgesehen sein, dass zu diesem Zweck der Anpressdruck der Presse beim Kühlen des Bauteils zumindest in Teilbereichen des Bauteils verändert und/oder die Temperatur der Presse beim Kühlen des Bauteils verändert wird. Zusätzlich oder alternativ dazu kann die Kühlzeit bzw. die Verweilzeit des Bauteils in der Presse verändert werden.

Wenn sich herausstellt, dass die Härte des Bauteils in einem bestimmten Bauteilbereich bei mehreren hintereinander folgenden Bauteilen unzulänglich ist, kann auch das Werkzeug der Presse nachgearbeitet und verändert werden.

Um dem Benutzer anzuzeigen, dass das aktuelle Bauteil mit seiner Härte zumindest bereichsweise außerhalb der SOLL-Vorgaben liegt, kann ein akustisches und/oder optisches Signal ausgegeben werden, wenn die IST-Härte des Bauteils von der SOLL-Härte um mehr als den vorgegebenen Toleranzwert abweicht.

Die Daten bezüglich der SOLL-Härte des Bauteils sind in der Auswertevorrichtung gespeichert. Diese Daten bezüglich der SOLL-Härte des Bauteils werden vorzugsweise anhand eines vorgegebenen Ideal-Bauteils ermittelt. Zu diesem Zweck wird ein Bauteil umgeformt und gehärtet und aus den Temperaturdaten werden in der Auswerteeinrichtung die entsprechenden Härtedaten ermittelt. Anschließend wird das Bauteil einer ausführlichen Härteprobe unterzogen. Wenn sich dabei herausstellt, dass das Bauteil die gewünschte Härte besitzt, werden die für dieses Bauteil vorher in der Auswerteeinrichtung gespeicherten Daten als SOLL-Härte verwendet. Wenn das Bauteil nicht die gewünschte Härte aufweist, werden die Daten verworfen und es wird ein neues Bauteil umgeformt und gehärtet und hinsichtlich seiner Härte untersucht. Dieses Vorgehen wird so oft wiederholt, bis die Daten eines Bauteils als SOLL-Härte übernommen werden können.

Ein weiterer Vorteil des erfindungsgemäßen Verfahrens ist dadurch gegeben, dass bei der Werkzeugeinrichtung bzw. im Testbetrieb bereits Bereiche erkannt werden können, in denen der Anpressdruck und somit die Kühlung des Bauteils nicht ausreichend oder übermäßig stark ist.

Die Erfassung der Oberflächentemperaturen des Bauteils kann auf verschiedene Weise erfolgen. In einer möglichen Ausgestaltung der Erfindung ist vorgesehen, dass die Oberflächentemperaturen des Bauteils in einer Vielzahl von diskreten Messpunkten erfasst werden, indem beispielsweise ein Feld von einzelnen Mess- oder Temperaturfühlern vorgesehen ist, die jeweils mit der Oberfläche des Bauteils in Anlage gebracht werden können. Die Anordnung der einzelnen Temperaturfühler kann an die Geometrie des Bauteils angepasst sein, es ist jedoch auch möglich, die Temperaturfühler und somit die Messpunkte in einem vorgegebenen Raster aus einer Vielzahl von Zeilen und Spalten (Rechteckraster) anzuordnen, wobei dann vom Benutzer einzelnen Temperaturfühler ausgewählt und angesteuert werden können, die die Messung der Oberflächentemperatur des Bauteils durchführen.

Alternativ oder zusätzlich dazu ist es auch möglich, die Oberflächentemperaturen des Bauteils mittels zumindest einer Thermographie-Kamera zu erfassen. Die Thermographie-Kameras sind vorzugsweise so angeordnet, dass von allen wesentlichen Oberflächenbereichen des Bauteils eine Information bezüglich der jeweiligen Oberflächentemperatur vorliegt.

Hinsichtlich der Vorrichtung wird die oben genannte Aufgabe durch eine Vorrichtung zur Bestimmung der Härte eines pressgehärteten Bauteils mit den Merkmalen des Anspruchs 13 gelöst. Dabei sind eine Halterung für das Bauteil, eine Messvorrichtung, mittels der Oberflächentemperaturen des Bauteils in unterschiedlichen Oberflächenbereichen erfassbar sind, und eine Auswerteeinrichtung vorgesehen, in der die von der Messvorrichtung erfassten Temperaturdaten in Daten bezüglich der IST-Härte des Bauteils umgerechnet und mit SOLL-Härten verglichen werden können. Wenn mittels der Vorrichtung festgestellt wird, dass die Temperatur in einigen Bereichen des Bauteils noch relativ hoch und insbesondere wesentlich höher als die entsprechende SOLL-Temperatur ist, lässt sich daraus ableiten, dass zumindest dieser Bereich des Bauteils nicht ausreichend gekühlt und dementsprechend auch nicht ausreichend gehärtet ist. Als Folge davon können einzelne oder mehrere Betriebsparameter der Presse mittels der Auswerteeinrichtung in Abhängigkeit von dem Vergleich zwischen der IST-Härte und der SOLL-Härte verändert werden.

Vorzugsweise ist die Vorrichtung zur Bestimmung der Härte eines pressgehärteten Bauteils in eine Pressenstraße oder eine sogenannte Pressenlinie integriert.

In bevorzugter Ausgestaltung der Erfindung ist vorgesehen, dass die Messvorrichtung eine Vielzahl von Temperaturfühlern umfasst, die wahlweise auf das zu messende Bauteil absenkbar und von diesem abhebbar sein können.

Die Temperaturfühler können hinsichtlich ihrer gegenseitigen Anordnung an die Geometrie des Bauteils angepasst sein, alternativ ist es hier auch möglich, die Temperaturfühler in einem vorbestimmten Raster aus Reihen und Spalten anzuordnen und alle oder vom Benutzer ausgewählte Temperaturfühler mit dem Bauteil in Kontakt zu bringen.

In bevorzugter Ausgestaltung der Erfindung ist vorgesehen, dass das Bauteil in der Halterung angeordnet und in dieser fixiert wird, woraufhin die Temperaturfühler mit dem Bauteil außenseitig in Anlage und insbesondere auf dieses abgesenkt werden. Um die Ausrichtung der Temperaturfühler relativ zu dem Bauteil ändern und einstellen zu können, kann in Weiterbildung der Erfindung vorgesehen sein, dass die Temperaturfühler an einem verstellbaren Träger gehalten sind.

In einer möglichen Ausgestaltung ist vorgesehen, dass der Träger plattenförmig ausgebildet und oberhalb von dem in die Vorrichtung eingesetzten Bauteil angeordnet ist, wobei der Träger in seiner Plattenebene und/oder normal zu seiner Plattenebene verstellt werden kann.

Alternativ dazu kann der Träger auch portalartig ausgebildet sein und das in die Vorrichtung eingesetzte Bauteil übergreifen. In diesem Fall sollte vorgesehen sein, dass der portalartige Träger linear, d.h. längs einer Linearführung verstellbar ist. Auf diese Weise kann das Bauteil durch Verschieben des portalartigen Trägers in unterschiedlichen Querschnittsebenen abgetastet werden, so dass die Anzahl der für die Erfassung der Restwärme des Bauteils notwendigen Temperaturfühler verringert ist.

Eine vollständige Erfassung der Oberflächentemperaturen des Bauteils lässt sich erzielen, wenn die Messvorrichtung zumindest eine und vorzugsweise mehrere Thermographie-Kameras umfasst.

Weitere Einzelheiten und Merkmale der Erfindung sind aus der folgenden Beschreibung von Ausführungsbeispielen unter Bezugnahme auf die Zeichnungen ersichtlich. Es zeigen:
- Fig. 1.: eine schematische perspektivische Ansicht eines ersten Ausführungsbeispiels der Erfindung,
- Fig. 2.: die Vorrichtung gemäß Fig. 1 vor Einsetzen des Bauteils,
- Fig. 3.: die Vorrichtung gemäß Fig. 2 nach Einsetzen des Bauteils und Absenken der Temperaturfühler,
- Fig. 4.: eine schematische perspektivische Ansicht eines zweiten Ausführungsbeispiels der Erfindung und
- Fig. 5.: eine schematische perspektivische Darstellung eines dritten Ausführungsbeispiels der Erfindung.

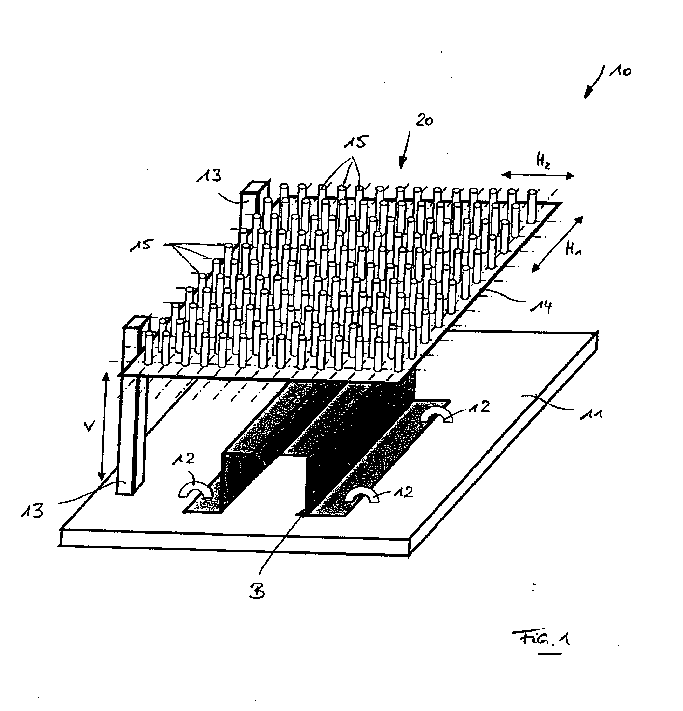

Fig. 1 zeigt eine Vorrichtung 10 zur Bestimmung der Härte eines pressgehärteten Bauteils B. Die Vorrichtung 10 umfasst eine plattenförmige Auflage 11, an der nur schematisch dargestellte Befestigungen 12 für das Bauteil B vorgesehen sind. Die Auflage 11 und die Befestigungen 12 bilden zusammen eine Halterung, in die das Bauteil B eingesetzt und in der es sicher fixiert werden kann.

Mit Abstand oberhalb der Auflage 11 ist eine Messvorrichtung 20 angeordnet, die einen plattenförmigen Träger 14 umfasst, der im Wesentlichen parallel zur Auflage 11 ausgerichtet ist und an zwei vertikalen Stützen 13 gehalten ist. Der plattenförmige Träger 14 kann an den vertikalen Stützen 13 in Richtung der unteren Auflage 11 abgesenkt und von dieser abgehoben werden, wie es durch den Doppelpfeil V angedeutet ist. Für sich kann der plattenförmige Träger 14 in der Plattenebene in zwei zueinander senkrecht verlaufende Richtungen in nicht näher dargestellter Weise verstellt werden, wie es durch die Doppelpfeile H₁ und H₂ angedeutet ist.

Der plattenförmige Träger 14 trägt eine Vielzahl von Temperaturfühlern 15, die in einem aus mehreren Reihen und Spalten aufgebauten Raster (Rechteckraster) angeordnet sind.

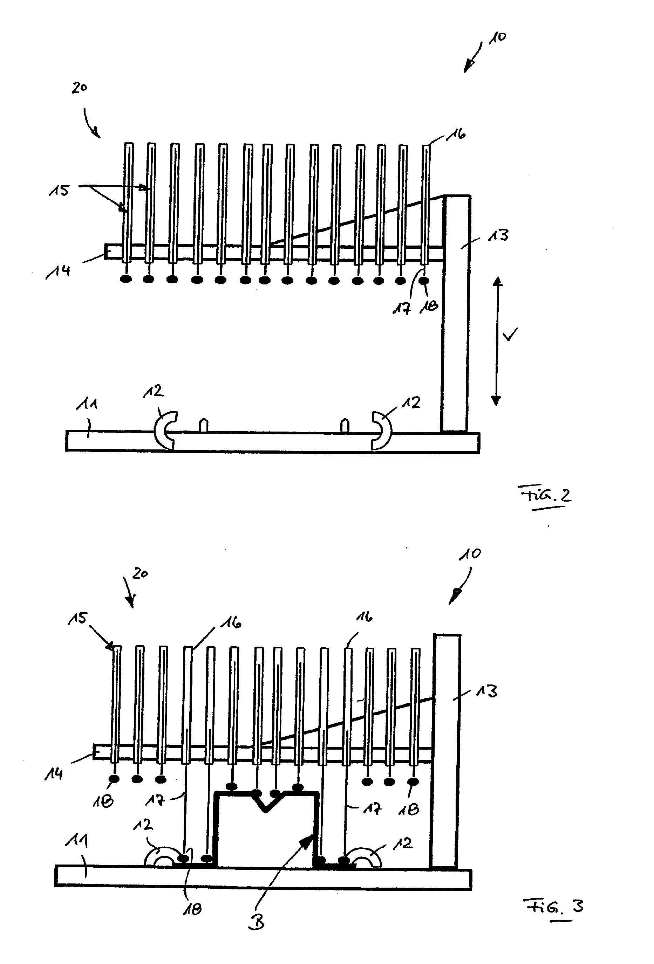

Wie Fig. 2 zeigt, umfasst jeder Temperaturfühler 15 ein zylinderförmiges Gehäuse 16, in dem ein Stab 17 linear verstellbar aufgenommen ist, an dessen unterem Ende ein Sensor 18 montiert ist. Jeder Temperaturfühler 15 ist in nicht dargestellter Weise mit einer Auswerteeinheit verbunden.

Fig. 2 zeigt die Vorrichtung 10 vor Einsetzen eines zu messenden Bauteils. Die Befestigungen 12 sind geöffnet und alle Temperaturfühler 15 sind in ihre nach oben eingezogene Stellung verfahren. Das aus der Presse kommende Bauteil B wird auf die Auflage 11 aufgelegt und durch Schließen der Befestigungen 12 fixiert (s. Fig.3). Anschließend werden die vom Benutzer ausgewählten Temperaturfühler 15 ausgefahren, bis ihre Sensoren 18 jeweils mit der Oberfläche des Bauteils B in Anlage kommen. Die Oberflächentemperaturen des Bauteils B werden so in einer Vielzahl von Punkten bzw. Oberflächenbereichen gemessen und entsprechende Messsignale werden an die Auswerteeinrichtung gegeben, die die IST-Temperaturwerte in Daten bezüglich der IST-Härte umrechnet und mit gespeicherten SOLL-Härte und Werten vergleicht. Eine übermäßige Abweichung der IST-Werte von den SOLL-Werten deutet darauf hin, dass das Bauteil in dem entsprechenden Bereich entweder nicht ausreichend gekühlt und somit auch nicht ausreichend gehärtet ist oder sogar übermäßig gekühlt und dadurch zu spröde ist.

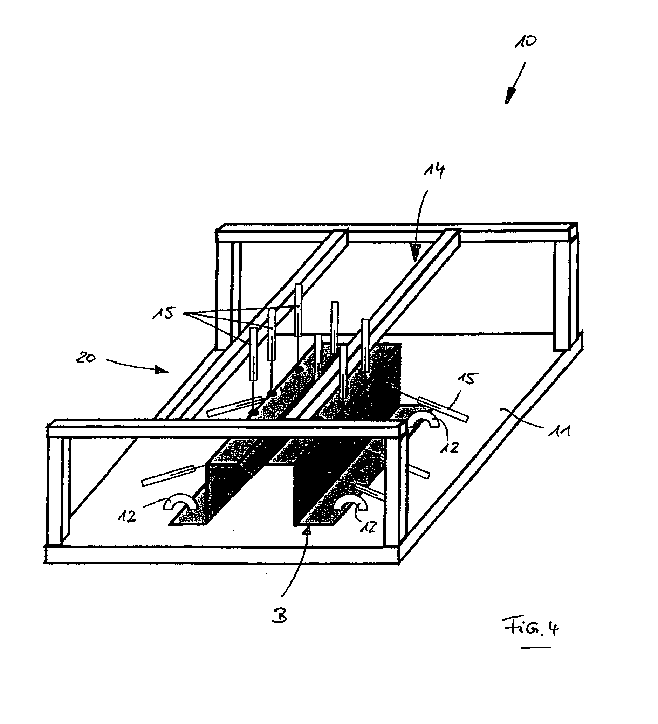

Die in den Fig. 1 bis 3 dargestellte Ausführungsform mit einem rasterartigen Feld einer Vielzahl von Temperaturfühlern 15 bringt den Vorteil mit sich, dass keine spezielle Anpassung an die Geometrie des Bauteils vorgenommen werden muss. Die Vielzahl von Temperaturfühlern 15 erhöht jedoch die Kosten der Vorrichtung. Um diese zu vermeiden zeigt Fig. 4 eine alternative Ausgestaltung, bei der der Träger 14 von einem rahmenartigen Gestell gebildet ist, an dem mehrere Temperaturfühler 15 gehalten sind, deren Ausrichtung an die Geometrie des Bauteils angepasst ist. Auch in diesem Fall wird von dem Bauteil B in einem einzigen Messvorgang die Oberflächentemperatur in einer Vielzahl von Oberflächenbereichen gleichzeitig ermittelt.

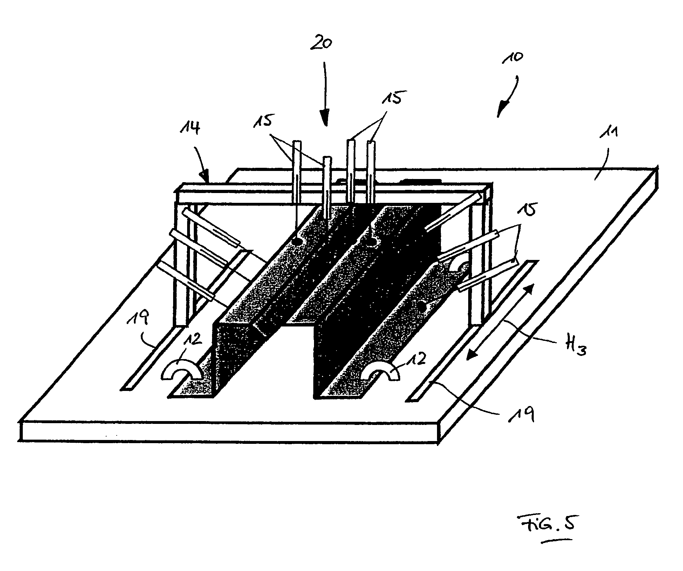

Um die Anzahl der notwendigen Messfühler 15 noch weiter zu reduzieren, ist die in Fig. 5 dargestellte Ausführungsform vorgesehen. Der Träger 14 ist portalartig ausgestaltet und übergreift das Bauteil B mit Abstand quer zu dieser Längsrichtung. An dem Träger 14 sind mehrere Temperaturfühler 15 ausgebildet, die jeweils gleichzeitig eine Temperaturmessung in mehreren diskreten Punkten eines Querschnitts des Bauteils B durchführen können. Um das Bauteil B über seine gesamte Länge vermessen zu können, ist der portalartige Träger 14 längs einer Linearführung 19 verstellbar (s. Pfeil H₃), die in Längsrichtung des Bauteils B verläuft. Durch aufeinanderfolgende Messung der Temperaturwerte in einzelnen Querschnitten des Bauteils B lässt sich ein Temperaturbild des gesamten Bauteils B erhalten.

## Patentansprüche

1. Verfahren zur Bestimmung der Härte eines pressgehärteten Bauteils (B), das auf eine vorbestimmte Temperatur erwärmt und anschließend in einer Presse umgeformt und abgekühlt wird, **dadurch gekennzeichnet, dass** die Oberflächentemperaturen des Bauteils (B) unmittelbar nach der Abkühlung in unterschiedlichen Oberflächenbereichen erfasst werden, dass die dabei gemessenen Temperaturdaten einer Auswertungseinrichtung zugeführt, dort in Daten bezüglich der IST-Härte des Bauteils umgerechnet und mit SOLL-Härten verglichen werden, und dass Betriebsparameter der Presse geändert werden und/oder das Bauteil ausgeschleust wird, wenn die IST-Härte des Bauteils von der SOLL-Härte um mehr als ein vorgegebener Toleranzwert abweicht.

2. Verfahren nach Anspruch 1, **dadurch gekennzeichnet, dass** die Oberflächentemperaturen des Bauteils (B) in einer Vielzahl von diskreten Messpunkten erfasst werden.

3. Verfahren nach Anspruch 2, **dadurch gekennzeichnet, dass** die Messpunkte rasterartig angeordnet sind.

4. Verfahren nach Anspruch 1, **dadurch gekennzeichnet, dass** die Oberflächentemperaturen mittels zumindest einer Thermographie-Kamera erfasst werden.

5. Verfahren nach einem der Ansprüche 1 bis 4, **dadurch gekennzeichnet, dass** das Bauteil (B) vor der Erfassung der Oberflächentemperaturen aus der Presse entnommen und in eine nachgeschaltete Messvorrichtung eingesetzt wird.

6. Verfahren nach Anspruch 5, **dadurch gekennzeichnet, dass** die Messung der Oberflächentemperaturen in einem zeitlichen Bereich von 1sec. bis 10sec. nach Einsetzen in die Messvorrichtung erfolgt.

7. Verfahren nach einem der Ansprüche 1 bis 6, **dadurch gekennzeichnet, dass** die Daten bezüglich der SOLL-Härte anhand eines vorgegebenen Ideal-Bauteils ermittelt werden.

8. Verfahren nach einem der Ansprüche 1 bis 7, **dadurch gekennzeichnet, dass** der Anpressdruck der Presse beim Kühlen des Bauteils zumindest in Teilbereichen des Bauteils verändert wird, wenn die IST-Härte des Bauteils von der SOLL-Härte um mehr als den vorgegebenen Toleranzwert abweicht.

9. Verfahren nach einem der Ansprüche 1 bis 8, **dadurch gekennzeichnet, dass** die Temperatur der Presse beim Kühlen des Bauteils zumindest in Teilbereichen verändert wird, wenn die IST-Härte des Bauteils von der SOLL-Härte um mehr als den vorgegebenen Toleranzwert abweicht.

10. Verfahren nach einem der Ansprüche 1 bis 9, **dadurch gekennzeichnet, dass** die Kühlzeit des Bauteils in der Presse verändert wird, wenn die IST-Härte des Bauteils von der SOLL-Härte um mehr als den vorgegebenen Toleranzwert abweicht.

11. Verfahren nach einem der Ansprüche 1 bis 10, **dadurch gekennzeichnet, dass** die Form des Werkzeugs der Presse verändert wird, wenn die IST-Härte des Bauteils von der SOLL-Härte um mehr als den vorgegebenen Toleranzwert abweicht.

12. Verfahren nach einem der Ansprüche 1 bis 10, **dadurch gekennzeichnet, dass** ein akustisches und/oder ein optisches Signal ausgegeben wird, wenn die IST-Härte des Bauteils von der SOLL-Härte um mehr als den vorgegebenen Toleranzwert abweicht.

13. Vorrichtung zur Bestimmung der Härte eines pressgehärteten Bauteils, insbesondere zur Durchführung des Verfahrens nach einem der Ansprüche 1 bis 12, mit einer Halterung (11,12) für das Bauteil (B), einer Messvorrichtung (20), mittels der Oberflächentemperaturen des Bauteils (B) in unterschiedlichen Oberflächenbereichen erfassbar sind, und eine Auswerteeinrichtung, in der die von der Messvorrichtung (20) erfassten Temperaturdaten in Daten bezüglich der IST-Härte des Bauteils umrechenbar und mit SOLL-Härten vergleichbar sind, wobei Betriebsparameter der Presse mittels der Auswerteeinrichtung in Abhängigkeit von dem Vergleich veränderbar sind.

14. Vorrichtung nach Anspruch 13, **dadurch gekennzeichnet, dass** die Messvorrichtung (20) eine Vielzahl von Temperaturfühlern (15) umfasst.

15. Vorrichtung nach Anspruch 14, **dadurch gekennzeichnet, dass** die Temperaturfühler (15) rasterartig angeordnet sind.

16. Vorrichtung nach Anspruch 13 oder 14, **dadurch gekennzeichnet, dass** die Temperaturfühler (15) an einem verstellbaren Träger (14) gehalten sind.

17. Vorrichtung nach Anspruch 16, **dadurch gekennzeichnet, dass** der Träger (14) plattenförmig ausgebildet und oberhalb von dem in die Vorrichtung eingesetzten Bauteil (B) angeordnet ist.

18. Vorrichtung nach Anspruch 17, **dadurch gekennzeichnet, dass** der Träger (14) in seiner Plattenebene und/oder normal zur Plattenebene verstellbar ist.

19. Vorrichtung nach Anspruch 16, **dadurch gekennzeichnet, dass** der Träger (14) portalartig ausgebildet ist und das in die Vorrichtung eingesetzte Bauteil (B) übergreift.

20. Vorrichtung nach einem der Ansprüche 16 bis 19, **dadurch gekennzeichnet, dass** der Träger (14) längs einer Linearführung (19) verfahrbar ist.

## Claims

1. Method for determining the hardness of a press-hardened component (B), which is heated to a predetermined temperature and subsequently shaped in a press and cooled down, **characterized in that** the surface temperatures of the component (B) are measured in different surface areas immediately after the cooling, **in that** the temperature data measured in the process are fed to an evaluation apparatus, are converted there into data relating to the actual hardness of the component and are compared with target hardnesses, and **in that** the operating parameters of the press are changed and/or the component is discarded if the actual hardness of the component deviates from the target hardness by more than a predefined tolerance value.

2. Method according to Claim 1, **characterized in that** the surface temperatures of the component (B) are measured at a multiplicity of discrete measuring points.

3. Method according to Claim 2, **characterized in that** the measuring points are arranged in the manner of a grid.

4. Method according to Claim 1, **characterized in that** the surface temperatures are measured by means of at least one thermographic camera.

5. Method according to one of Claims 1 to 4, **characterized in that**, before the measurement of the surface temperatures, the component (B) is removed from the press and is inserted into a downstream measuring device.

6. Method according to Claim 5, **characterized in that** the measurement of the surface temperatures is carried out in a time range of 1 sec. to 10 sec. following insertion into the measuring device.

7. Method according to one of Claims 1 to 6, **characterized in that** the data relating to the target hardness are determined by using a predefined ideal component.

8. Method according to one of Claims 1 to 7, **characterized in that** during the cooling of the component, the pressing pressure of the press is changed, at least in sub-areas of the component, if the actual hardness of the component deviates from the target hardness by more than the predefined tolerance value.

9. Method according to one of Claims 1 to 8, **characterized in that**, during the cooling of the component, the temperature of the press is changed, at least in sub-areas, if the actual hardness of the component deviates from the target hardness by more than the predefined tolerance value.

10. Method according to one of Claims 1 to 9, **characterized in that** the cooling time of the component in the press is changed if the actual hardness of the component deviates from the target hardness by more than the predefined tolerance value.

11. Method according to one of Claims 1 to 10, **characterized in that** the shape of the tool of the press is changed if the actual hardness of the component deviates from the target hardness by more than the predefined tolerance value.

12. Method according to one of Claims 1 to 10, **characterized in that** an acoustic and/or a visual signal is output if the actual hardness of the component deviates from the target hardness by more than the predefined tolerance value.

13. Device for determining the hardness of a press-hardened component, in particular for carrying out the method according to one of Claims 1 to 12, having a holder (11, 12) for the component (B), a measuring device (20) by means of which the surface temperatures of the component (B) can be measured in different surface areas, and an evaluation apparatus, in which the temperature data measured by the measuring device (20) can be converted into data relating to the actual hardness of the component and can be compared with target hardnesses, wherein operating parameters of the press can be changed by means of the evaluation apparatus as a function of the comparison.

14. Device according to Claim 13, **characterized in that** the measuring device (20) comprises a multiplicity of temperature sensors (15).

15. Device according to Claim 14, **characterized in that** the temperature sensors (15) are arranged in the manner of a grid.

16. Device according to Claim 13 or 14, **characterized in that** the temperature sensors (15) are held on an adjustable carrier (14).

17. Device according to Claim 16, **characterized in that** the carrier (14) is formed in the manner of a plate and is arranged above the component (B) inserted into the device.

18. Device according to Claim 17, **characterized in that** the carrier (14) can be adjusted in its plate plane and/or normally with respect to the plate plane.

19. Device according to Claim 16, **characterized in that** the carrier (14) is formed in the manner of a gantry and reaches over the component (B) inserted into the device.

20. Device according to one of Claims 16 to 19, **characterized in that** the carrier (14) can be moved along a linear guide (19).

## Revendications

1. Procédé destiné à déterminer la dureté d'un composant (B) durci à la presse, ledit composant étant chauffé jusqu'à atteindre une température prédéfinie puis déformé et refroidi dans une presse, **caractérisé en ce que** les températures de surface du composant (B) sont déterminées dans différentes régions de surface, directement après le refroidissement, que les données de température mesurées en l'occurrence sont amenées à un dispositif d'analyse, qu'elles y sont converties en données indiquant la dureté réelle du composant et qu'elles sont comparées à des duretés théoriques et que les paramètres de fonctionnement de la presse sont modifiés et/ou que le composant est exfiltré lorsque la dureté réelle du composant s'écarte de la dureté théorique de plus d'une valeur de tolérance prédéfinie.

2. Procédé selon la revendication 1, **caractérisé en ce que** les températures de surface du composant (B) sont déterminées en une pluralité de points de mesure distincts.

3. Procédé selon la revendication 2, **caractérisé en ce que** les points de mesure sont disposés selon un quadrillage.

4. Procédé selon la revendication 1, **caractérisé en ce que** les températures de surface sont déterminées à l'aide d'au moins une caméra thermographique.

5. Procédé selon l'une quelconque des revendications 1 à 4, **caractérisé en ce que** le composant (B) est retiré de la presse avant de détecter les températures de surface et inséré dans un dispositif de mesure placé en aval.

6. Procédé selon la revendication 5, **caractérisé en ce que** la mesure des températures de surface se produit dans une fourchette de temps allant de 1 s. à 10 s. après insertion dans le dispositif de mesure.

7. Procédé selon l'une quelconque des revendications 1 à 6, **caractérisé en ce que** les données indiquant la dureté théorique sont déterminées à l'aide d'un composant idéal prédéfini.

8. Procédé selon l'une quelconque des revendications 1 à 7, **caractérisé en ce que** l'effort de pressage de la presse est modifié lors du refroidissement du composant au moins dans certaines zones partielles du composant lorsque la dureté réelle du composant s'écarte de la dureté théorique de plus de la valeur de tolérance prédéfinie.

9. Procédé selon l'une quelconque des revendications 1 à 8, **caractérisé en ce que** la température de la presse est modifiée lors du refroidissement du composant au moins dans les zones partielles lorsque la dureté réelle du composant s'écarte de la dureté théorique de plus de la valeur de tolérance prédéfinie.

10. Procédé selon l'une quelconque des revendications 1 à 9, **caractérisé en ce que** le temps de refroidissement du composant dans la presse est modifié lorsque la dureté réelle du composant s'écarte de la dureté théorique de plus de la valeur de tolérance prédéfinie.

11. Procédé selon l'une quelconque des revendications 1 à 10, **caractérisé en ce que** la forme de l'outil de la presse est modifiée lorsque la dureté réelle du composant s'écarte de la dureté théorique de plus de la valeur de tolérance prédéfinie.

12. Procédé selon l'une quelconque des revendications 1 à 10, **caractérisé en ce qu'**un signal acoustique et/ou un signal optique est émis lorsque la dureté réelle du composant s'écarte de la dureté théorique de plus de la valeur de tolérance prédéfinie.

13. Dispositif destiné à déterminer la dureté d'un composant durci à la presse, notamment pour mettre en oeuvre le procédé selon l'une quelconque des revendications 1 à 12, avec une fixation (11, 12) prévue pour le composant (B), un dispositif de mesure (20) à l'aide duquel les températures de surface du composant (B) peuvent être déterminées dans différentes régions de surface et un dispositif d'analyse dans lequel les données de température détectées par le dispositif de mesure (20) peuvent être converties en données indiquant la dureté réelle du composant et être comparées à des duretés théoriques, les paramètres de fonctionnement de la presse pouvant être modifiés à l'aide du dispositif d'analyse en fonction du résultat de la comparaison.

14. Dispositif selon la revendication 13, **caractérisé en ce que** le dispositif de mesure (20) comprend une pluralité de capteurs de température (15).

15. Dispositif selon la revendication 14, **caractérisé en ce que** les capteurs de température (15) sont disposés suivant un quadrillage.

16. Dispositif selon la revendication 13 ou 14, **caractérisé en ce que** les capteurs de température (15) sont maintenus contre un support (14) mobile.

17. Dispositif selon la revendication 16, **caractérisé en ce que** le support (14) est réalisé en forme de plaque et disposé au-dessus du composant (B) inséré dans le dispositif.

18. Dispositif selon la revendication 17, **caractérisé en ce que** le support (14) peut être déplacé dans son plan de plaque et/ou perpendiculairement au plan de plaque.

19. Dispositif selon la revendication 16, **caractérisé en ce que** le support (14) prend une forme de portique et saisit le composant (B) inséré dans le dispositif.

20. Dispositif selon l'une quelconque des revendications 16 à 19, **caractérisé en ce que** le support (14) peut être déplacé le long d'un guide linéaire (19).
